(19) Europäisches Patentamt

European Patent Office

Office européen des brevets

(11) Veröffentlichungsnummer: **0 490 123 A2**

(12) **EUROPÄISCHE PATENTANMELDUNG**

(21) Anmeldenummer: **91119623.6**

(22) Anmeldetag: **18.11.91**

(51) Int. Cl.⁵: **H02H 3/33**, H02H 3/04

(30) Priorität: **14.12.90 DE 4039921**

(43) Veröffentlichungstag der Anmeldung:
**17.06.92 Patentblatt 92/25**

(84) Benannte Vertragsstaaten:
**AT BE DE DK ES FR IT NL SE**

(71) Anmelder: **SCHUPA-ELEKTRO-GMBH + CO KG**
**Postfach 1460 Klagebach 40**
**W-5885 Schalksmühle(DE)**

(72) Erfinder: **Middelmann, Dirk, Ing. (grad.)**
**Rheinermark 61**
**W-5860 Iserlohn(DE)**

(54) **Fehlerstrom-Sensorschaltung.**

(57) Die Erfindung betrifft eine hilfsspannungsunabhängige Fehlerstrom-Sensorschaltung, die die Überschreitung eines oberen Grenzwertes des Fehlerstromes mittels eines Halbleiter-Schalters meldet und diese Meldung nach Unterschreitung eines unteren Grenzwertes selbsttätig wieder löscht, mit einem Summenstromwandler zur Erfassung des Fehlerstroms und mindestens einer Sekundärwicklung, die an eine Schalt-Elektronik angeschlossen ist. Dabei wird erfindungsgemäß die Versorgungsspannung der Elektronik aus der vom Fehlerstrom in der oder den Sekundärwicklungen induzierten Spannung gewonnen.

EP 0 490 123 A2

Die Erfindung betrifft eine Fehlerstrom-Sensorschaltung gemäß dem Oberbegriff des Patentanspruches 1.

Herkömmliche Fehlerstrom-Schutzeinrichtungen haben die Aufgabe, bei Auftreten eines unzulässig hohen Fehlerstromes die angeschlossenen Verbraucher bleibend abzuschalten; zur Wiedereinschaltung ist gewöhnlich eine Handbetätigung erforderlich (vgl. DE-PS 552 678).

Fehlerstrom-Sensoren dagegen dienen lediglich zur Meldung der Überschreitung eines oberen Grenzwertes des Fehlerstromes, wobei diese Meldung nach Unterschreitung eines unteren Grenzwertes selbsttätig wieder gelöscht wird.

Durch den Anschluß derartiger Sensoren an entsprechende Steuereinrichtungen lassen sich z. B. die Vorgänge:
- Fehlerstromüberwachung
- Prüfung der Fehlerstrom-Überwachungseinrichtung
- Ab- und Einschaltung gefährdeter elektrischer Verbraucher

auch automatisch bzw. programmgesteuert durchführen.

Aus der Firmenschrift "Meßwandler, Fehlerstrom-Schutzeinrichtungen, Meßumformer, Niederspannungskatalog N3-84" Seite 74 (Relais EFIR) und Seite 75 (Schaltbild) der Firma Ritz Meßwandler, Hamburg, sind elektronische Fehlerstrom-Relais bekannt, die sich bei Verzicht auf den standardmäßig eingebauten Haftspeicher als Fehlerstrom-Sensoren verwenden lassen. Hier wird für den Meldevorgang ein Relais benutzt, welches von einem Verstärker angesteuert wird, der zu seiner Funktion eine Hilfsenergie benötigt, die in diesem Fall einem Außenleiter und dem Neutralleiter des überwachten Drehstromnetzes entnommen wird. Diese Anordnung hat folgende Nachteile:
- keine Funktion bei Ausfall des zur Versorgung benutzten Außenleiters;
- Platzbedarf und Herstellkosten für Verstärker und Netzteil sind hoch;
- ständiger Verbrauch elektrischer Energie während des Betriebes.

Aufgabe der Erfindung ist es, unter Vermeidung der vorgenannten Nachteile eine Sensorschaltung zu entwickeln, die weder eine Hilfsspannung aus dem Netz, noch aus Batterien oder sonstigen Quellen benötigt.

Diese Aufgabe wird gelöst durch die in den Ansprüchen genannten Merkmale.

Eine weitere Ausgestaltung der Erfindung besteht darin, daß in der Ausführungsform als Schließer ein MOS-Anreicherungstransistor und in der Ausführungsform als Öffner ein MOS-Verarmungstransistor als Ausgangsschalttransistor verwendet wird.

Die Vorteile, die durch die erfindungsgemäßen Schaltungen bewirkt werden, bestehen im wesentlichen darin, daß hilfsspannungsunabhängige Fehlerstrom-Sensoren zur Verfügung stehen, bei denen die erforderliche Leistung zum Betreiben der Schaltungen dem Fehlerstrom entnommen wird.

Ein Ausführungsbeispiel der Erfindung ist in der Zeichnung dargestellt und wird im folgenden näher beschrieben. Es zeigt:

Fig. 1 die Sensorschaltung mit einem MOS-Anreicherungtransistor zur Schließerfunktion;

Fig. 2 die gleiche Sensorschaltung mit einem MOS-Verarmungstransistor zur Öffnerfunktion.

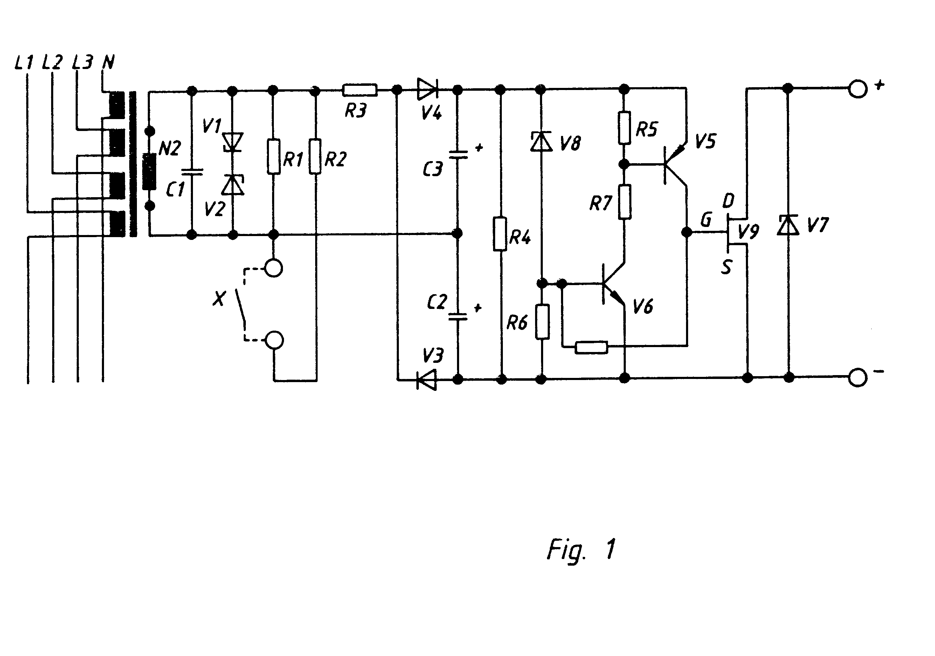

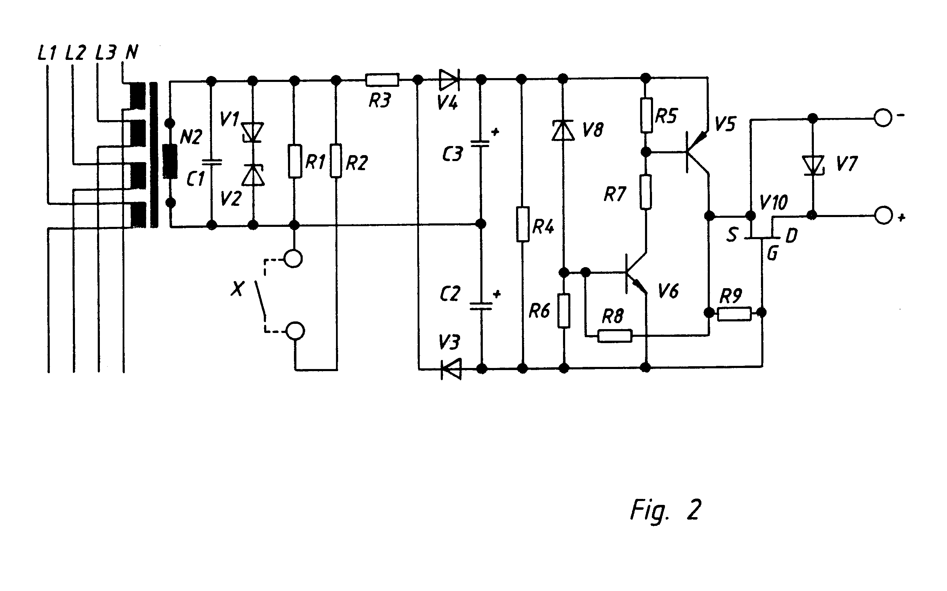

Gemäß den Sensorschaltungen nach den Fig. 1 und 2 wird eine vom Fehlerstrom in der Sekundärwicklung N2 induzierte Wechselspannung durch die Z-Dioden-Kette V1/V2 begrenzt und über den Ladewiderstand R3 dem aus den Dioden V3/V4 und den Kondensatoren C2/C3 bestehenden, spannungsverdoppelnden Gleichrichter zugeführt. Der Widerstand R4 stellt eine Grundlast für die so gewonnene Gleichspannung dar. Der über die Widerstände R5, R7 und R8 und den PNP-Transistor V5 mitgekoppelte NPN-Transistor V6 wird leitend, sobald diese Gleichspannung hoch genug ist, um über die Z-Diode V8 am Widerstand R6 eine Spannung von ca. 0,5 Volt abfallen zu lassen. Die Mitkopplung über den PNP-Transistor V5 bewirkt neben eindeutigen Schaltzuständen und steilen Schaltflanken eine Schalthysterese. Bei zurückgehendem Fehlerstrom und damit kleiner werdender Gleichspannung wird der NPN-Transistor V6 zunächst noch über den leitenden Transistor V5 und den Spannungsteiler R8/R6 leitend gehalten. Erst bei deutlicher Unterschreitung des Ansprechfehlerstroms sinkt der Spannungsabfall an R6 unter ca. 0,5 Volt, wodurch V6 und damit auch V5 in den gesperrten Zustand übergehen. Die Mitkopplung ist damit aufgehoben, die Schaltstufe kippt schlagartig in den "AUS"-Zustand zurück. Der als Ausgangskontakt wirkende MOS-Transistor V9 gemäß Fig. 1 wird von dieser Schaltstufe direkt angesteuert. Dabei schützt die Z-Diode V7 den MOS-Transistor V9 vor zu hohen Spannungen und vor Spannungen falscher Polarität.

Zur Schaltung von Wechselspannungen kann ein Brückengleichrichter nachgeschaltet werden.

Zur Ausführung der Sensorschaltung mit Öffner-Schaltkontakt gemäß Fig. 2 kann ein selbstleitender MOS-Verarmungstransistor V10 als Ausgangskontakt verwendet werden. Hierdurch lassen sich Ruhestrom-Ausgänge realisieren.

Der Widerstand R1 dient in Verbindung mit dem Resonanzkondensator C1 der Grundeinstellung der Ansprechwerte für Wechsel- und pulsierende Gleichfehlerströme.

Bedingt durch das Schaltungsprinzip erfolgt die Meldung des Sensors mit einer zeitlichen Verzögerung, die von der Höhe des fließenden Fehlerstroms abhängig ist. Durch geeignete Dimensionierung der Dioden V1/V2, des Ladewiderstandes R3 und der Kondensatoren C2/C3 läßt sich auch die Verzögerungscharakteristik einstellen.

Darüber hinaus bieten beide Sensorschaltungen noch die Möglichkeit, die Ansprechschwelle zu erhöhen, indem eine Kurzschlußbrücke X in jede Schaltung einfügbar ist. Durch Schließen der jeweiligen Kurzschlußbrücke wird ein Widerstand R2 zugeschaltet, der die Ansprechschwelle erhöht.

**Patentansprüche**

1. Fehlerstrom-Sensorschaltung, die die Überschreitung eines oberen Grenzwertes des Fehlerstromes durch einen Arbeits- oder Ruhekontakt meldet und diese Meldung nach Unter-schreiten eines unteren Grenzwertes selbsttä-tig wieder löscht, mit einem Summenstromwandler zur Erfassung des Fehlerstromes, der mit mindestens einer Sekundärwicklung versehen ist, dadurch gekennzeichnet, daß die Sensorschaltung (Fig. 1, Fig. 2) hilfsspannungsunabhängig ist, indem sie ihre Versorgungsspannung aus der vom Fehlerstrom in der Sekundärwicklung (N2) induzierten Spannung erhält.

2. Fehlerstrom-Sensorschaltung nach Anspruch 1, dadurch gekennzeichnet, daß die Meldung durch Schalten eines Halbleiters (V9 Fig. 1 und V10 Fig 2) erfolgt.

3. Sensorschaltung nach Anspruch 1 und 2, da-durch gekennzeichnet, daß die Schließerfunk-tion (Fig. 1) durch Schalten des MOS-Anreicherungstransistors (V9) erfolgt.

4. Sensorschaltung nach Anspruch 1 und 2, dadurch gekennzeichnet, daß die Öffnerfunktion (Fig. 2) durch Schalten eines MOS-Verar-mungstransistors (V10) erfolgt.

Fig. 1

EP 0 490 123 A2

Fig. 2

EP 0 490 123 A2